# EUROPÄISCHE PATENTSCHRIFT

(11) **EP 3 172 115 B1**
(45) Veröffentlichungstag und Bekanntmachung des Hinweises auf die Patenterteilung: **24.10.2018**
(21) Anmeldenummer: 15744884.6
(22) Anmeldetag: 24.06.2015
(51) Int. Cl.: B62D 5/04, F16H 55/24

(54) **ELEKTROMECHANISCHE SERVOLENKUNG**
ELECTROMECHANICAL POWER STEERING SYSTEM
SYSTÈME DE DIRECTION ASSISTÉE ÉLECTROMÉCANIQUE

(30) Priorität: 22.07.2014 DE 102014110306
(43) Veröffentlichungstag der Anmeldung: 31.05.2017
(73) Patentinhaber: ThyssenKrupp Presta AG, 9492 Eschen (LI); thyssenkrupp AG, 45143 Essen (DE)
(72) Erfinder: SCHLEGEL, Ulrich, 7304 Maienfeld (CH); BÜCHEL, Manuel, CH-9470 Buchs SG (CH); RENGGLI, Patrick, CH-8006 Zürich (CH)
(74) Vertreter: thyssenkrupp Intellectual Property GmbH
(86) Internationale Anmeldenummer: PCT/EP2015/064192
(87) Internationale Veröffentlichungsnummer: WO 2016/012181

(56) Entgegenhaltungen:
- WO-A1-2013/152995
- DE-A1-102013 213 708
- KR-A- 20100 102 347

## Beschreibung

### Technisches Gebiet

Die vorliegende Erfindung betrifft eine elektromechanische Servolenkung für ein Kraftfahrzeug zur Unterstützung der Lenkbewegungen.

### Stand der Technik

Im Stand der Technik sind elektromechanische Servolenkungen mit elektromechanischen Vorrichtungen zur Unterstützung der Lenkbewegungen bekannt. Eine elektromechanische Servolenkung weist eine mit einem Lenkrad verbundene Eingangswelle auf, über welche vom Fahrer die Lenkbefehle in Form von Lenkmomenten eingeleitet werden. Eine mit der Eingangswelle verbundene Ausgangswelle überträgt die Lenkmomente über Spurstangen an die zu lenkenden Räder. Zur Bestimmung einer für die Lenkbewegung erforderlichen Unterstützungskraft sind die Eingangswelle und die Ausgangswelle üblicherweise über einen Drehstab elastisch miteinander verbunden, wobei mittels der Bestimmung einer Relativverdrehung zwischen der Eingangswelle und der Ausgangswelle das durch den Fahrer in die Eingangswelle aufgebrachte Drehmoment bestimmt werden kann.

Hilfskraftunterstützungen, beispielsweise elektrische Hilfskraftunterstützungen oder elektromechanische Hilfskraftunterstützungen, werden zum Eintragen der entsprechenden Hilfsdrehmomente üblicherweise an der Ausgangswelle, am Lenkritzel oder an der Zahnstange angesetzt. Die jeweilige Hilfskraftunterstützung wird dabei über die Bestimmung des vom Fahrer über das Lenkrad in die Eingangswelle eingetragenen Drehmoments bezüglich der Ausgangswelle angesteuert.

In elektromechanischen Hilfskraftunterstützungen für elektromechanische Servolenkungen ist es bekannt, die jeweilige Unterstützungskraft mittels eines Elektromotors aufzubringen, wobei die Hilfskraft beispielsweise über eine Antriebsschnecke auf ein Schneckenrad übertragen wird, welches mit dem Lenkstrang gekoppelt ist. Hierzu ist der Elektromotor üblicherweise mit der Antriebsschnecke gekoppelt, entweder durch ein direktes Ansetzen der Antriebsschnecke auf die Abtriebswelle des Elektromotors, oder mittels eines zwischen Elektromotor und Antriebsschnecke geschalteten Getriebes. Die Antriebsschnecke wirkt auf ein Schneckenrad, welches das Drehmoment beispielsweise über ein Getriebe, einen Zahnstangenmechanismus oder einen Riementrieb auf den eigentlichen Lenkstrang überträgt. Hierbei kann die Hilfskraftunterstützung die Unterstützungskraft beispielsweise im Bereich der Lenkwelle, des Lenkritzels oder der Zahnstange eintragen.

Die Antriebsschnecke ist üblicherweise in einem Gehäuse der Vorrichtung mittels eines Lagers gelagert. Um ein spielfreie Einstellung der Verzahnung zwischen Antriebsschnecke und Schneckenrad bereitzustellen, wodurch unerwünschte Geräuschentwicklungen vermieden werden können, welche beispielsweise aufgrund einer wechselnder Anlage des Schneckenrades an die beiden Zahnflanken der Antriebsschnecke bei einem Oszillieren der Lenkung um eine Mittellage unter Geradeausfahrt auftreten können, ist es bekannt, die Aufnahmebohrung des Innenrings des Lagers exzentrisch zur Außenfläche des Außenrings des Lagers anzuordnen und den hierdurch generierten Exzenter zumeist federunterstützt vorzuspannen.

Aus der DE 10 2011 015 883 A1 ist eine elektromechanische Servolenkung bekannt, bei der ein um eine Schwenkachse schwenkbarer Exzenterhebel eine darin mittels eines Industriewälzlagers gelagerte Antriebsschnecke über eine zwischen dem Exzenterhebel und einem Gehäuse angebrachte Feder gegen das Schneckenrad vorspannt. Bei einem Schwenken des Exzenterhebels kann es bei diesem Aufbau und einem steifen Exzenter zu einem Verkippen der Lagerringe zueinander kommen. Auch können durch die resultierende S-förmige Verbiegung der Antriebsschnecke aufgrund der beidseitig biegesteifen Lagerung Zwangszustände in der Verzahnung zwischen der Antriebsschnecke und dem Schneckenrad auftreten, da ein Winkelausgleich nicht bereitgestellt wird. Ferner kann die Schwenkachse des Exzenterhebels verkippen.

Die EP 2 423 075 A2 zeigt eine elektrische Lenkvorrichtung mit einer Hilfskraftunterstützung, bei welcher ein die Antriebsschnecke tragendes Wälzlager mittels eines federnden Ringes zwischen dem Lager und dem Gehäuse der Hilfskraftunterstützung angeordnet ist, wobei der federnde Ring Blattfederelemente aufweist. Da das Lager in alle Richtungen verkippbar ist, ist folglich eine definierte Achse für den Winkelausgleich nicht bereitgestellt. Ferner ist durch den Einsatz des federnden Ringes die Steifigkeit der Aufnahme der Antriebsschnecke reduziert.

Aus der KR 2010 0102347 A als nächstliegender Stand der Technik ist eine elektromechanische Servolenkung für ein Kraftfahrzeug bekannt, die eine von einem Elektromotor angetriebene Antriebsschnecke umfasst, welche mit einem mit einer Lenkwelle gekoppelten Schneckenrad zusammenwirkt, wobei die Antriebsschnecke um ihre Schneckenachse herum rotierbar in einem in einer Halterung gehaltenen Lager gelagert ist und die Halterung die Antriebsschnecke in Richtung auf das Schneckenrad zu vorspannt, wobei die Halterung um eine Schwenkachse herum schwenkbar angeordnet ist, die parallel zur Schneckenachse ausgebildet ist.

### Darstellung der Erfindung

Ausgehend von dem bekannten Stand der Technik ist es eine Aufgabe der vorliegenden Erfindung, eine elektromechanische Servolenkung bereitzustellen, welche ein verbessertes Lagerverhalten zeigt.

Diese Aufgabe wird durch eine elektromechanische Servolenkung mit den Merkmalen des Anspruchs 1 gelöst. Vorteilhafte Weiterbildungen ergeben sich aus den Unteransprüchen.

Entsprechend wird eine elektromechanische Servolenkung für ein Kraftfahrzeug vorgeschlagen, umfassend eine von einem Elektromotor angetriebene Antriebsschnecke, welche mit einem mit einer Lenkwelle gekoppeltes Schneckenrad zusammenwirkt, wobei die Antriebsschnecke um ihre Schneckenachse herum rotierbar in einem in einer Halterung gehaltenen Lager gelagert ist und die Halterung die Antriebsschnecke in Richtung auf das Schneckenrad zu vorspannt. Erfindungsgemäß ist die Halterung um eine senkrecht zur Schneckenachse angeordnete Torsionsachse torsionsweich ausgebildet.

Unter torsionsweich wird verstanden, dass die Halterung eine geringere Torsionssteifigkeit um die senkrecht zur Schneckenachse angeordnete Torsionsachse aufweist als um die Schneckenachse.

Dadurch, dass die Halterung um eine Torsionsachse senkrecht zur Schneckenachse torsionsweich ausgebildet ist, kann ein Winkelausgleich zwischen der Schneckenachse und dem die Antriebsschnecke radial abstützenden Lager erfolgen. Insbesondere ist es hierdurch möglich, der Antriebsschnecke über die Torsionsachse der Halterung eine definierte Verschwenkachse bereitzustellen, um welche herum ein Winkelausgleich stattfinden kann. In einer Weiterbildung kann dieser Winkelausgleich mit einer elastischen Vorspannung ausgebildet sein, der durch die entsprechende Ausbildung der Torsionssteifigkeit um die Torsionsachse ausgelegt werden kann. Weiterhin kann durch Bereitstellung der zum Winkelausgleich um eine Torsionsachse tordierbaren Halterung die Stabilität und die Steifigkeit der Lagerung der Antriebsschnecke gegenüber dem Stand der Technik erhöht werden. Damit ist es möglich, ein verbessertes Antriebsverhalten und ein verbessertes Geräuschverhalten zu erreichen. Weiterhin kann aufgrund der Reduzierung beziehungsweise Dämpfung der Freiheitsgrade des Lagers hinsichtlich des Verschwenkens um andere Achsen als der bereitgestellten Torsionsachse das Lagerverhalten verbessert werden. Beispielsweise können hinsichtlich der Reduzierung des Bewegungsumfangs Hystereseeffekte durch ein Hin- und Herschwingen der Antriebsschnecke bei einem Lastwechsel verringert werden.

Da der Winkelausgleich mittels der Torsion der Halterung innerhalb der Halterung erfolgt, kann ein Standardwälzlager verwendet werden, welches einfach und kostengünstig herzustellen ist und keine besonderen Anforderungen an den Einbau und die Herstellung stellt.

Weiterhin wird durch die Bereitstellung der tordierbaren Halterung erreicht, dass keine zusätzlichen Teile, welche die Steifigkeit der Lagerung verringern könnten, zur Realisierung des Winkelausgleichs notwendig sind.

Bei dem verwendeten Lager handelt es sich bevorzugt um ein Wälzlager, es sind aber auch andere Lagertypen denkbar.

Die Halterung ist um eine Schwenkachse herum schwenkbar angeordnet, wobei die Schwenkachse außerhalb des in der Halterung angeordneten Lagers liegt und die Halterung bevorzugt am Gehäuse schwenkbar gelagert ist.

Durch die schwenkbare Anordnung der Halterung um die Schwenkachse herum kann eine Veränderung der Verzahnung zwischen der Antriebsschnecke und dem Schneckenrad, beispielsweise aufgrund von Belastungen während des Betriebs, aufgrund von Temperatureinflüssen oder aufgrund von Verschleiß, ausgeglichen werden. Weiterhin kann mit einfachen Mitteln eine definierte Vorspannung der Antriebsschnecke gegen das Schneckenrad erzielt werden, indem die Halterung um die Schwenkachse herum in Richtung auf das Schneckenrad zu vorgespannt wird.
In einer Weiterführung weist die Halterung mindestens einen zumindest eine Materialaussparung aufweisenden Bereich zur Bereitstellung der reduzierten Torsionssteifigkeit auf. Bevorzugt ist die zumindest eine Materialaussparung senkrecht zur gewünschten Torsionsachse der Halterung orientiert. Besonders bevorzugt teilt der mindestens eine die zumindest eine Materialaussparung aufweisende Bereich die Halterung in einen ersten Bereich, in welchem die Halterung um die Schwenkachse schwenkbar gelagert ist, und einen zweiten Bereich, in welchem die Lageraufnahme für das die Antriebsschnecke abstützende Lager vorgesehen ist. Der zweite Bereich der Halterung ist entsprechend gegenüber dem ersten Bereich um die Torsionsachse herum tordierbar.

Der die Materialaussparung aufweisende Bereich ist bevorzugt so ausgebildet, dass die Halterung um die Torsionsachse herum die niedrigste Torsionssteifigkeit aufweist, also am torsionsweichsten ist. Um sämtliche anderen Achsen herum ist die Halterung bevorzugt steifer ausgeführt. Da die Halterung um die anderen Achsen herum steifer ist, kann eine Vorspannung der Antriebsschnecke in Richtung auf das Schneckenrad aufgebracht werden, insbesondere in Querrichtung zu der Schwenkachse, gleichzeitig aber der Winkelausgleich bereitgestellt werden. Bevorzugt unterscheidet sich die Halterung in ihrer Torsionssteifigkeit bezüglich der nicht mit der Torsionsachse zusammenfallenden Achsen nicht oder nicht wesentlich von einer Halterung mit den gleichen Dimensionen und aus dem gleichen Material aber ohne Materialaussparung.

In einer bevorzugten Ausbildung ist die mindestens eine Materialaussparung in Form einer umlaufenden Materialreduktion der Halterung in dem mindestens einen Bereich reduzierter Torsionssteifigkeit bereitgestellt. Durch die Ausbildung der mindestens einen Materialaussparung in dieser Form kann eine Halterung mit den oben genannten Eigenschaften bereitgestellt werden, welche einfach zu fertigen ist. Weiterhin kann der Bereich mit reduzierter Torsionssteifigkeit sehr kompakt ausgeführt werden. Bevorzugt ist die Reduktion der Abmaße der Halterung in Richtung der Schwenkachse respektive der Schneckenachse geringer, als die Reduktion der Abmaße der Halterung senkrecht zur Schwenkachse und zur Torsionsachse. Hierdurch kann die Steifigkeit der Halterung in Richtung der Schwenkachse im Vergleich zur einer voll ausgebildeten Halterung im Wesentlichen beibehalten werden.

In einer Weiterführung kann die mindestens eine Materialaussparung in Form einer Bohrung und/oder einer Nut bereitgestellt sein. Bevorzugt sind die Bohrung und/oder die Nut bezüglich der Torsionsachse der Halterung orthogonal und mittig im Bauteil, gemessen in Richtung der Schwenkachse des Bauteils, angeordnet. Anders ausgedrückt ist die Mittelachse der Bohrung und/oder der Nut bevorzugt konzentrisch zu mindestens einer Hauptachse der Halterung bereitgestellt. Damit ist die Bohrung und/oder die Nut bevorzugt so angeordnet, dass die axialen Flächenträgheitsmomente und somit die Biegesteifigkeiten der Halterung in dem die Bohrung und/oder die Nut aufweisenden Bereich im Wesentlichen unbeeinflusst bleiben.

Da die Bohrung und/oder die Nut an der Halterung mindestens einen randoffenen Bereich erzeugen, ist das Torsionsflächenträgheitsmoment und damit die Torsionssteifigkeit gegenüber einer Halterung mit geschlossenen Querschnitt in diesem Bereich reduziert..

Bevorzugt ist mindestens eine Drehfeder, bevorzugt eine Schenkelfeder, vorgesehen, um die Vorspannung der Antriebsschnecke gegen das Schneckenrad aufzubringen. Besonders bevorzugt ist die Drehfeder an der Halterung angeordnet und stützt sich ganz besonders bevorzugt an dem Gehäuse ab, um die Vorspannung der Halterung und somit die Vorspannung der Antriebsschnecke in Richtung des Schneckenrads bereitzustellen. Durch die Verwendung einer Drehfeder kann die Lagervorrichtung kompakt ausgebildet werden, da die Drehfeder direkt an die Halterung angeordnet werden kann. Weiterhin sind am Gehäuse keine zusätzlichen Elemente, wie beispielsweise Haken, Ösen oder besonders gestaltete Flächen zur Abstützung notwendig.

In einer alternativen Ausbildung können auch andere Drehfederarten oder andere Federtypen, beispielsweise eine oder mehrere Zugfedern, Blattfedern oder Druckfedern, oder alternative Elemente zum Aufbringen einer Vorspannkraft, wie beispielsweise Magnete, zum Aufbringen der Vorspannung verwendet werden.

Besonders bevorzugt ist die Halterung um die Torsionsachse herum torsionsweicher ausgebildet, als um jede senkrecht zu der Torsionsachse angeordnete Achse. Damit kann entsprechend erreicht werden, dass die Halterung einen Winkelausgleich ermöglicht und gleichzeitig aber ein sicheres Halten des Lagers in dessen Axialrichtung und ein sicheres Aufbringen der Vorspannung der Antriebsschnecke gegenüber dem Schneckenrad ermöglicht.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung eines Lenksystems eines Kraftfahrzeugs mit einer Hilfskraftunterstützung;
- Figur 2: eine schematische Darstellung einer herkömmlichen Vorrichtung zum Aufbringen einer Hilfskraft in einer elektromechanischen Servolenkung;
- Figur 3: eine schematische perspektivische Darstellung von Teilen der Vorrichtung aus Figur 2 mit geöffnetem Gehäuse;
- Figur 4: eine schematische perspektivische Darstellung einer geöffneten Vorrichtung zur Aufbringung einer Hilfskraft auf eine elektromechanische Servolenkung in einem ersten Ausführungsbeispiel;
- Figur 5: eine Detaildarstellung aus Figur 4;
- Figur 6: eine schematische, auseinandergezogene Darstellung einer Lagervorrichtung und einer Antriebsschnecke des Schneckenantriebs der Figuren 4 und 5;
- Figur 7: eine schematische, perspektivische Darstellung einer Halterung für das Lager zur Lagerung der Antriebsschnecke des Schneckenantriebs der Figuren 4 bis 6;
- Figur 8: eine schematische, perspektivische Darstellung einer Halterung für ein Lager zur Lagerung einer Antriebsschnecke eines Schneckenantriebs in einem weiteren Ausführungsbeispiel;
- Figur 9: eine schematische Schnittdarstellung durch die Halterung aus Figur 8.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

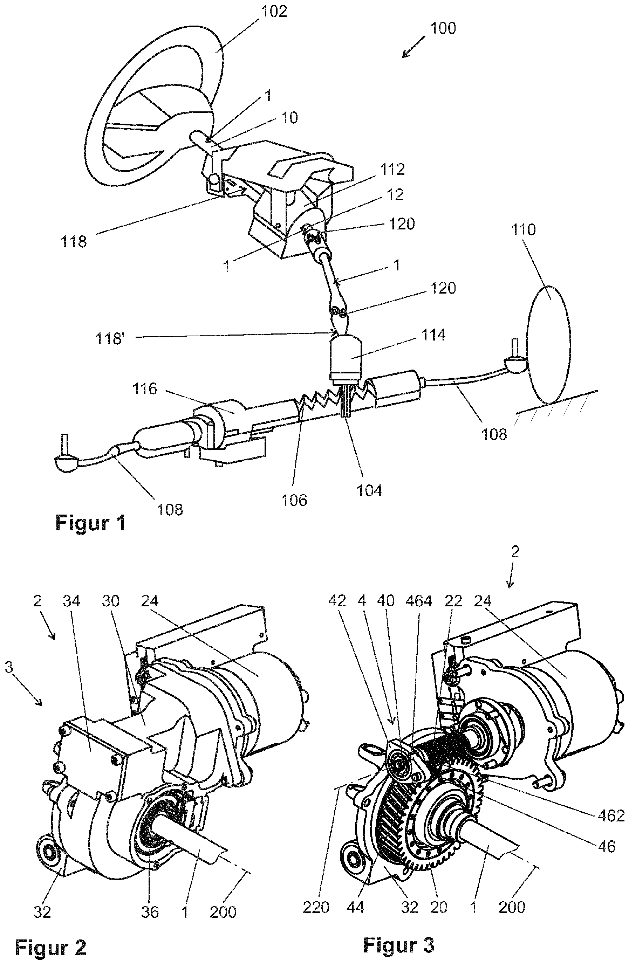

In Figur 1 ist eine schematische Darstellung einer elektromechanischen Servolenkung 100 gezeigt, wobei ein Fahrer über ein Lenkrad 102 ein entsprechendes Drehmoment als Lenkbefehl in eine Lenkwelle 1 einbringen kann. Das Drehmoment wird dann über die Lenkwelle 1 auf ein Lenkritzel 104 übertragen, welches mit einer Zahnstange 106 kämmt, die dann ihrerseits über entsprechende Spurstangen 108 den vorgegebenen Lenkwinkel auf die lenkbaren Räder 110 des Kraftfahrzeugs überträgt.

Eine elektrische Hilfskraftunterstützung kann in Form einer mit der Lenkwelle 1 gekoppelten Hilfskraftunterstützung 112, einer mit dem Ritzel 104 gekoppelten Hilfskraftunterstützung 114 und/oder einer mit der Zahnstange 106 gekoppelten Hilfskraftunterstützung 116 vorgesehen sein. Die jeweilige Hilfskraftunterstützung 112, 114 oder 116 trägt eine Hilfskraft in die Lenkwelle 1, das Lenkritzel 104 und/oder die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung. Es sind auch andere Positionen denkbar. Üblicherweise ist nur eine einzige der gezeigten Positionen mit einer Hilfskraftunterstützung belegt und entsprechend nur eine einzige Hilfskraftunterstützung vorgesehen.

Die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten Eingangsdrehmoments bestimmt. Alternativ oder in Kombination mit der Einbringung der Hilfskraft kann mit der Hilfskraftunterstützung 112, 114, 116 auch ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eine mit dem Lenkrad 102 verbundene Eingangswelle 10 und eine mit der Zahnstage 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann beispielsweise über einen Drehwinkelsensor gemessen werden und entsprechend aufgrund der bekannten Torsionssteifigkeit des Drehstabes ein entsprechendes Eingangsdrehmoment relativ zur Ausgangswelle bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise in Form einer elektromagnetischen, optischen oder anderen Messung der Relativverdrehung der Eingangswelle 10 bezüglich der Ausgangswelle 12 realisiert werden.

Entsprechend wird ein Drehmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 hervorrufen, wenn die Ausgangswelle 12 gegen den Drehwiderstand des Drehstabs relativ zu der Eingangswelle 10 verdreht wird.

Der Drehmomentsensor 118 kann alternativ auch an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder eine einzutragende Hilfskraft bestimmen zu können.

Die Lenkwelle 1 in der Figur 1 umfasst weiterhin mindestens ein kardanisches Gelenk 120, mittels welchem der Verlauf der Lenkwelle 1 im Kraftfahrzeug an die räumlichen und/oder baulichen Gegebenheiten angepasst werden kann.

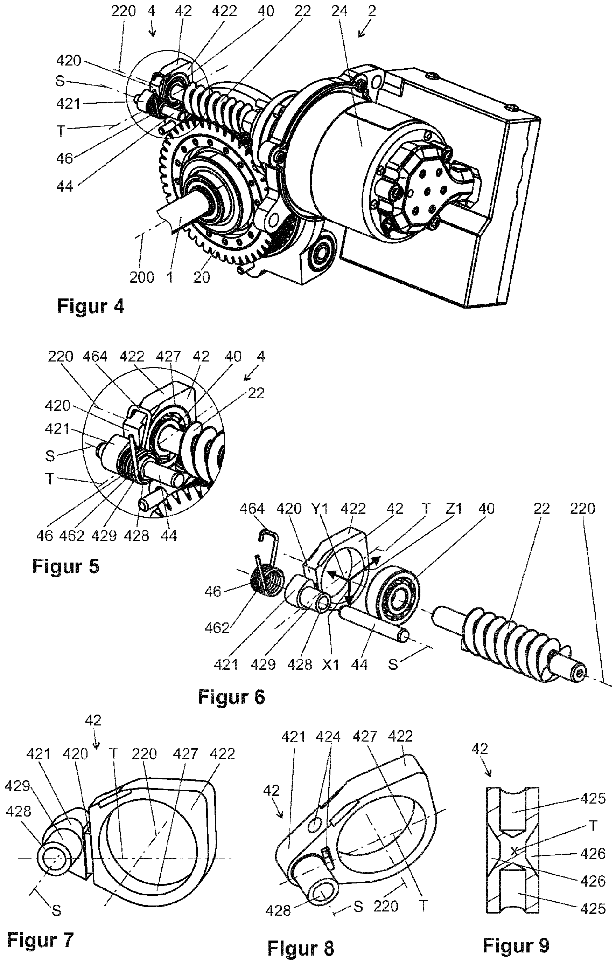

In den Figuren 2 und 3 ist eine herkömmliche elektromechanische Servolenkung 100 gezeigt. Der schematische Aufbau aus den Figuren 2 und 3 der elektromechanischen Servolenkung 100 wird auch den nachfolgenden Ausführungsformen der Figuren 4 bis 10 zugrunde gelegt.

Dabei ist eine schematische Darstellung eine Vorrichtung 2 zum Aufbringen einer Hilfskraft in einer elektromechanischen Servolenkung 100 gezeigt. Die Vorrichtung 2 ist mit der Lenkwelle 1 der elektromechanischen Servolenkung 100 verbunden und dient entsprechend dazu, eine Hilfskraft auf die Lenkwelle 1 aufzubringen.

Wie sich beispielsweise aus Figur 3 ergibt, ist die Lenkwelle 1 in an sich bekannter Weise drehfest mit einem auf der Lenkwelle 1 aufgebrachten Schneckenrad 20 verbunden. Das Schneckenrad 20 ist gemeinsam mit der Lenkwelle 1 um eine Schneckenradachse 200, welche koaxial zu der Achse der Lenkwelle 1 in diesem Bereich angeordnet ist, rotierbar.

Das Schneckenrad 20 wird über eine mit diesem kämmende Antriebsschnecke 22 angetrieben, welche ein erstes Ende 222 und ein zweites Ende 224 aufweist. Die Antriebsschnecke 22 ist an ihrem ersten Ende 222 mit dem Abtrieb eines Elektromotors 24 gekoppelt, um mittels des Elektromotors 24 eine Hilfskraft und/oder einen Zusatzlenkwinkel über die Antriebsschnecke 22 auf das Schneckenrad 20 und dann auf die Lenkwelle 1 und damit in den Lenkstrang der elektromechanischen Servolenkung 100 zu übertragen. Die Antriebsschnecke 22 weist eine Schneckenachse 220 auf, um welche herum sie bei Einleitung eines Drehmoments durch den Abtrieb des Elektromotors 24 rotiert. Ein solcher Schneckenantrieb zum Einleiten einer Hilfskraft in eine Lenkwelle 1 einer elektromechanischen Servolenkung 100 ist prinzipiell bekannt.

Das dem Abtrieb des Elektromotors 24 gegenüberliegende zweite Ende 224 der Antriebsschnecke 22 ist in einem Lager 40 gelagert und durch dieses radial abgestützt. Das Lager 40 ist in einer Halterung 42 gehalten, welche über einen eine Schwenkachse S ausbildenden Stift 44 an dem Gehäuse schwenkbar gelagert ist. Die Schwenkachse S ist im Wesentlichen parallel zur Schneckenachse 220 ausgebildet, wenn sich diese im unbelasteten Zustand befindet. Unter "*im Wesentlichen parallel*" wird eine Abweichung von der Parallelität von maximal +/- 5° verstanden. Die Schwenkachse S erstreckt sich weiterhin auch im Wesentlichen senkrecht zur Schneckenradachse 200 des Schneckenrads 20. Unter "*im Wesentlichen senkrecht*" wird hier ein zwischen den Achsen eingeschlossener Winkel zwischen 85° und 95° verstanden.

Die Halterung 42 ist mittels eines nachfolgend beschriebenen Vorspannmittels um die Schwenkachse S herum auf das Schneckenrad 20 zu vorgespannt. Durch die Vorspannung wird die Antriebsschnecke 22 entsprechend so in Eingriff mit dem Schneckenrad 20 gebracht und gehalten, dass ein spielarmer Eingriff über die gesamte Lebensdauer der elektromechanischen Servolenkung 100 hinweg stattfinden kann.

Die Vorspannung wird in den gezeigten Ausführungsbeispielen mittels eines als Schenkelfeder 46 ausgebildeten Vorspannmittels aufgebracht, welche bezüglich des ersten Ausführungsbeispiels in den Figuren 4 bis 7 detailliert beschrieben wird. Andere Vorspannmittel sind jedoch ebenfalls denkbar.

Wie sich aus Figur 2 ergibt, ist der Elektromotor 24 an einem Gehäuse 3 angebracht, wobei sich der Abtrieb des Elektromotors 24 im Inneren des Gehäuses 3 befindet. Das Gehäuse 3 ist dreiteilig ausgeführt und weist einen Grundkörper 30, einen Gehäuseflansch 32 und eine Abdeckplatte 34 auf. Die Lenkwelle 1 führt in das Innere des Gehäuses 3 und ist in diesem über ein Lager gelagert, welches die Lenkwelle 1 im Gehäuse 3 radial abstützt. Weiterhin ist ein Drehmomentensensor 36 vorgesehen.

In den Figuren 4 bis 7 ist eine elektromechanische Servolenkung 100 in einem ersten Ausführungsbeispiel gezeigt. Der grundlegende Aufbau der elektromechanischen Servolenkung 100 entspricht dabei dem, der in den Figuren 2 bis 3 gezeigt wurde.

Der Aufbau und die Wirkung des Vorspannmittels in Form der Schenkelfeder 46 ist aus den Figuren 4 bis 6 zu erkennen. Entsprechend ist die Schenkelfeder 46 auf einer Federaufnahme 429 konzentrisch zu dem Stift 44 aufgenommen. Die Schenkelfeder 46 stützt sich mit einem ersten Arm 462 am Gehäuse 3 ab. Über einen doppelt gebogenen, an der Halterung 42 anliegenden zweiten Arm 464 der Schenkelfeder 46 wird diese dann um die Schwenkachse S herum in Richtung auf das Schneckenrad 20 vorgespannt. Alternativ können auch andere Federn oder elastische Elemente zur Vorspannung der Halterung vorgesehen sein, wie beispielsweise Zugfedern, Blattfedern oder Druckfedern. Weiterhin können auch alternative Elemente wie beispielsweise Magnete zum Aufbringen der Vorspannkraft verwendet werden.

Im Gegensatz zu der Halterung 42 aus Figur 3 weist die Halterung 42 in dem Ausführungsbeispiel der Figuren 4 bis 7 einen Bereich umlaufender Materialreduktion 420 auf. Dieser Bereich umlaufender Materialreduktion 420 teilt die Halterung 42 in einen ersten, den Stift 44 aufnehmenden Bereich 421, über welchen die Halterung 42 am Gehäuse 3 verschwenkbar gehalten ist, und einen zweiten, das Lager 40 aufnehmenden Bereich 422.

In dem Bereich umlaufender Materialreduktion 420 ist die Torsionssteifigkeit der Halterung 42 gegenüber den angrenzenden ersten und zweiten Bereichen 421, 422 reduziert, so dass die Halterung 42 eine auf diese Weise definierte torsionsweiche Torsionsachse T ausbildet. Damit ist ein Verkippen des zweiten Bereichs 422, welcher das Lager 40 aufnimmt, gegenüber dem ersten Bereich 421, welcher durch den Stift 44 im Wesentlichen verkippfest am Gehäuse 3 gehalten ist, möglich. Entsprechend kann der zweite Bereich 422 und damit das an diesem gehaltene Lager 40 einer möglichen Verkippung der Schneckenachse 220 der Antriebsschnecke 22 an ihrem zweiten Ende 224 folgen, so dass das zweite Ende 224 der Antriebsschnecke 22 stets weitgehend senkrecht zum Lager 40 geführt sein kann. Damit kann ein verschleißarmer Betrieb des Lagers 40 erreicht werden. Ein solches Verkippen der Schneckenachse 220 kann durch eine elastische Verbiegung der Antriebsschnecke 22 hervorgerufen werden, welche aufgrund von an der Verzahnung auf die Antriebsschnecke 22 wirkenden Radialkräften entsteht. Das Verkippen kann auch durch das Vorspannen der Halterung 42 und damit auch der Antriebsschnecke 22 in Richtung auf das Schneckenrad 20 zu hervorgerufen werden, wenn sich aufgrund der Abnutzung des Schneckenrads 20 oder der Antriebsschnecke 22 die Ausrichtung der Schneckenachse 220 beim durch die Vorspannung erzeugten vollständigen Eingriff verändert.

Entsprechend ist die Halterung 42 bezüglich einer Torsionsachse T, welche senkrecht zur Schneckenachse 220 beziehungsweise dem zweiten Ende 224 der Schneckenachse 220 ausgerichtet ist, torsionsweich ausgebildet. Bei einer entsprechenden Veränderung der Ausrichtung der Schneckenachse 220 ausgehend von der unbelasteten und/oder ursprünglichen Ausrichtung der Schneckenachse 220 kann die Halterung 42 entsprechend um die Torsionsachse T herum tordiert werden, um zu erreichen, dass das zweite Ende 224 der Schneckenachse 220 stets weitgehend senkrecht im Lager 40 gelagert wird. Entsprechend wird der zweite Bereich 422 der Halterung 42 gegenüber dem ersten Bereich 421 der Halterung 42 um die Torsionsachse T herum tordiert, um den entsprechenden Winkelausgleich bereitstellen zu können.

Entsprechend kann ein Winkelausgleich zwischen dem das Walzläger 40 tragenden zweiten Bereich 422 der Halterung 42 und dem ersten Bereich 421, in welchem die Halterung 42 mittels des Stiftes 44 um die Schwenkachse S gelagert ist, erfolgen. Somit kann bei einer Änderung des Winkels zwischen der Achse 220 der Antriebsschnecke 22 zur Schwenkachse S der Halterung 42 um eine sich zwischen der Schwenkachse S und der Schneckenachse 220 ausbildenden Torsionsachse T ein Winkelausgleich in dem Bereich der umlaufenden Materialreduktion 420 der Halterung 42 erfolgen. Durch diesen Winkelausgleich werden Zwangsbedingungen an der Antriebsschnecke 22 und dem die Antriebsschnecke radial abstützenden Lager 40, im Bereich der Lagerung der Halterung 42 wie beispielsweise einer Stiftaufnahme der Halterung 42, dem Stift 44 selbst sowie dem Bereich des Gehäuses 3, in welchem der Stift 44 angeordnet ist, reduziert oder vermieden.

Dabei ist der Bereich umlaufender Materialreduktion 420 bevorzugt so ausgebildet, dass die Steifigkeit der Halterung 42 in Richtung der durch die Schenkelfeder 46 auf die Antriebsschnecke 22 aufgebrachte Vorspannkraft, sowie in Querrichtung zu dieser nicht wesentlich reduziert wird. Mit anderen Worten ist der Bereich umlaufender Materialreduktion 420 so ausgebildet, dass mittels der Halterung 42 weiterhin die Antriebsschnecke 22 radial auf das Schneckenrad 20 zu vorgespannt werden kann und eine sichere Lagerung der Antriebsschnecke 22 im Lager 40 erreicht werden kann. Entsprechend kann die Halterung 42 sicher sowohl Radialkräfte des Lagers 40, als auch von der Antriebsschnecke 22 auf das Lager 40 übertragene Axialkräfte aufnehmen.

Aufgrund der Form, des Querschnitts und/oder der Orientierung des Bereichs umlaufender Materialreduktion 420 bildet sich eine Torsionsachse T in der Halterung 42 aus, welche senkrecht zur Schneckenachse 220 und senkrecht zur Schwenkachse S verläuft, wobei die Torsionsachse T in einer durch die Schwenkachse S und die Schneckenachse 220 ausgebildeten Ebene liegt. Mit anderen Worten weist die Torsionsachse T einen Schnittpunkt mit der Schwenkachse S und einen Schnittpunkt mit der Schneckenachse 220 auf.

Die Halterung 42 weist um die Torsionsachse T herum eine geringere Torsionssteifigkeit auf, als um die durch die Schwenkachse S ausgebildete Achse beziehungsweise um zu dieser parallele Achsen. Die Halterung 42 ist bevorzugt weiterhin so ausgebildet, dass sie zumindest bezüglich aller senkrecht zur oben definierten Torsionsachse T angeordneten Achsen torsionssteifer ist, als um die Torsionsachse T selbst.

Mit anderen Worten ist die Halterung 42 um die Torsionsachse T herum torsionsweicher, als um jede senkrecht zu der Torsionsachse T angeordnete Achse.

Aus der Detaildarstellung in Figur 5 ergibt sich, dass der durch den Bereich umlaufender Materialreduktion 420 abgegrenzte erste Bereich 421 eine Stiftaufnahme 428 zur Aufnahme des Stiftes 44 und einen Federaufnahme 429 zur Positionierung der Schenkelfelder 46 aufweist. In einer Aufnahmebohrung 427 im zweiten Bereich 422 der Halterung 42 ist das Lager 40 aufgenommen.

In einer bevorzugten Ausgestaltung drückt der zweifach gebogene zweite Arm 464 der Schenkelfeder 46 von der Schwenkachse S gesehen jenseits des Bereichs umlaufender Materialreduktion 420 direkt auf den zweiten Bereich 422 der Halterung 42, so dass die Richtung der Vorspannkraft trotz eines möglicherweise zwischen der Schwenkachse S und der Schneckenachse 220 um die Torsionsachse T auftretenden Winkelversatzes bei einer Torsion weiter stabil in Richtung des Schneckenrads 20 weist. Damit wird die Torsion des Bereichs umlaufender Materialreduktion 420 der Halterung 42 nicht oder nur in geringem Maße beeinflusst, wodurch die Stabilität der Lagervorrichtung 4 radial zur Schneckenachse 220 im Bereich der Verzahnung weiter erhöht wird.

Der Aufbau der Lagervorrichtung 4 ist in Figur 6 noch einmal in einer auseinander gezogenen Darstellung gezeigt, wobei hier die Anordnung und Ausrichtung der einzelnen Komponenten der Lagervorrichtung 4 bezüglich der Schwenkachse S und der Schneckenachse 220 der Antriebsschnecke 22 zu entnehmen sind. Entsprechend sind der die Halterung 42 positionierende Stift 44, die Stiftaufnahme 428 der Halterung 42 und die Schenkelfeder 46, welche über die Federaufnahme 429 an der Halterung 42 positioniert ist, konzentrisch zur Schwenkachse S angeordnet. Weiterhin sind die Aufnahmebohrung 427 in der Halterung 42 zur Aufnahme des Lagers 40, das Lager 40 und die Antriebsschnecke 22 konzentrisch zur Schneckenachse 220 angeordnet.

In Figur 6 ist ein Koordinatensystem gezeigt, welches sich auf die Halterung 42 bezieht und eine erste Koordinatenachse X1, eine zweite Koordinatenachse Y1 und eine dritte Koordinatenachse Z1 aufweist. Die zweite Koordinatenachse Y1 liegt konzentrisch zur Aufnahmebohrung 427, die erste Koordinatenachse X1 weist in Richtung der Vorspannkraft, mittels welcher die Antriebsschnecke 22 durch die Schenkelfeder 46 über die Halterung 42 und das Lager 40 zum Schneckenrad 20 hin vorgespannt wird, und die dritte Koordinatenachse Z1 weist orthogonal zur ersten Koordinatenachse X1 und zur zweiten Koordinatenachse Y1 von der Schwenkachse S weg. Aufgrund der Gestaltung des Bereichs umlaufender Materialreduktion 420 weist die Halterung 42 in Richtung der ersten Koordinatenachse X1 sowie in Richtung der dritten Koordinatenachse Z1, folglich radial zur Aufnahmebohrung 427, im Vergleich zu einer voll ausgebildeten Halterung eine hohe Steifigkeit auf. So ist gewährleistet, dass die Antriebsschnecke 22 während des Betriebs der Vorrichtung 2 stabil positioniert ist. Die Torsionsachse T ist in Richtung der dritten Koordinatenasche Z1 orientiert, liegt jedoch in Richtung der zweiten Koordinatenachse Y1 gesehen mittig in der Halterung 42, also mittig in der Materialstärke der Halterung 42.

Die Halterung 42 der Figuren 4 bis 6 ist in Figur 7 in einer schematischen, perspektivischen Detailansicht gezeigt. An den ersten Bereich 421 der Halterung 42 schließt sich der Bereich umlaufender Materialreduktion 420 an, welcher den ersten Bereich 421 von dem die Aufnahmebohrung 427 des Lagers 40 umfassenden zweiten Bereich 422 trennt. Der Bereich umlaufender Materialreduktion 420 ist hierbei so angeordnet, dass sich die Torsionsachse T senkrecht zur Schneckenachse 220 ausbildet und mittig durch die Halterung 42 verläuft.

Die in den Figuren 8 und 9 schematisch gezeigte weitere Ausführungsform einer Halterung 42 entspricht im Wesentlichen der Halterung 42 aus den Figuren 4 bis 7, wobei die Halterung 42 anstelle des Bereichs umlaufender Materialreduktion zur Reduktion der Torsionssteifigkeit in dem Bereich zwischen dem ersten Bereich 421 und dem zweiten Bereich 422 lokale, voneinander abgegrenzte Materialaussparungen 424 aufweist. Hierbei ist die Halterung 42 in Figur 8 in einer schematischen perspektivischen Darstellung und in Figur 9 in einer schematischen Schnittansicht durch den die Materialaussparungen 424 aufweisenden Bereich gezeigt.

Die Materialaussparungen 424 sind in diesem Fall als Bohrungen 425 und Nuten 426 bereitgestellt. So bleiben die Außenabmaße der Halterung 42 im Wesentlichen erhalten. In der in Figur 9 gezeigten, schematischen Schnittdarstellung durch den die Materialaussparungen 424 aufweisenden Bereich der Halterung 42 wird ersichtlich, dass durch die auf den Querschnitt der Halterung 42 bezogene mittige und achssymmetrische Anordnung der Bohrungen 425 und Nuten 426 die axialen Flächenträgheitsmomente und somit die Biegesteifigkeiten im Wesentlichen unbeeinflusst bleiben, das Torsionsflächenträgheitsmoment und somit die Torsionssteifigkeit durch die mittels der Bohrungen 425 und Nuten 426 erzeugten randoffenen Bereiche gegenüber einer Halterung mit vollem Querschnitt deutlich reduziert ist.

Hierdurch ist ein Winkelausgleich zwischen der Schwenkachse S und der Achse der Aufnahmebohrung 427 durch die Verwindung der Halterung 42 in dem die Bohrungen 425 und Nuten 426 aufweisenden Bereich ermöglicht. Die Torsionsachse T verläuft hierbei wieder mittig durch die Halterung 42 und schneidet die Schwenkachse S und die Schneckenachse 220.

## Patentansprüche

1. Elektromechanische Servolenkung (100) für ein Kraftfahrzeug, umfassend eine von einem Elektromotor (24) angetriebene Antriebsschnecke (22), welche mit einem mit einer Lenkwelle (1) gekoppelten Schneckenrad (20) zusammenwirkt, wobei die Antriebsschnecke (22) um ihre Schneckenachse (220) herum rotierbar in einem in einer Halterung (42) gehaltenen Lager (40) gelagert ist und die Halterung (42) die Antriebsschnecke (22) in Richtung auf das Schneckenrad (20) zu vorspannt, wobei die Halterung (42) um eine Schwenkachse (S) herum schwenkbar angeordnet ist, die im Wesentlichen parallel zur Schneckenachse (220) ausgebildet ist,
**dadurch gekennzeichnet, dass**
die Halterung (42) um eine senkrecht zur Schneckenachse (220) angeordnete Torsionsachse (T) torsionsweich ist.

2. Elektromechanische Servolenkung (100) gemäß Anspruch 1, **dadurch gekennzeichnet, dass** die Halterung (42) mindestens einen eine Materialaussparung (424) aufweisenden Bereich zur Bereitstellung der reduzierten Torsionssteifigkeit aufweist.

3. Elektromechanische Servolenkung (100) gemäß Anspruch 2, **dadurch gekennzeichnet, dass** die mindestens eine Materialaussparung (424) in Form einer umlaufenden Materialreduktion (420) bereitgestellt ist.

4. Elektromechanische Servolenkung (100) gemäß Anspruch 2 oder 3, **dadurch gekennzeichnet, dass** die mindestens eine Materialaussparung (424) in Form mindestens einer Bohrung (425) und/oder mindestens einer Nut (426) bereitgestellt ist.

5. Elektromechanische Servolenkung (100) gemäß einem der Ansprüche 1 bis 4, **dadurch gekennzeichnet, dass** die Halterung (42) mittels einer Feder gegen das Schneckenrad (20) vorgespannt ist.

6. Elektromechanische Servolenkung (100) gemäß einem der vorstehenden Ansprüche, **dadurch gekennzeichnet, dass** die Halterung (42) um die Torsionsachse (T) herum torsionsweicher ausgebildet ist, als um jede senkrecht zu der Torsionsachse (T) angeordnete Achse.

## Claims

1. Electromechanical power steering system (100) for a motor vehicle, comprising a driving worm (22) which is driven by an electric motor (24) and interacts with a worm gear (20) which is coupled to a steering shaft (1), wherein the driving worm (22) is mounted, in such a way that it can rotate about its worm axis (220), in a bearing (40) which is held in a mount (42), and the mount (42) prestresses the driving worm (22) in the direction of the worm gear (20), wherein the mount (42) is arranged so as to be pivotable about a pivoting axis (S) which is embodied essentially parallel to the worm axis (220),
**characterized in that**
the mount (42) is torsionally weak about a torsion axis (T) which is arranged perpendicularly with respect to the worm axis (220).

2. Electromechanical power steering system (100) according to Claim 1, **characterized in that** the mount (42) has at least one region, having a material cutout (424), for making available the reduced torsional rigidity.

3. Electromechanical power steering system (100) according to Claim 2, **characterized in that** the at least one material cutout (424) is made available in the form of a circumferential material reduction (420) .

4. Electromechanical power steering system (100) according to Claim 2 or 3, **characterized in that** the at least one material cutout (424) is made available in the form of at least one drilled hole (425) and/or at least one groove (426).

5. Electromechanical power steering system (100) according to one of Claims 1 to 4, **characterized in that** the mount (42) is prestressed against the worm gear (20) by means of a spring.

6. Electromechanical power steering system (100) according to one of the preceding claims, **characterized in that** the mount (42) is embodied so as to be torsionally weaker about the torsion axis (T) than about any axis arranged perpendicularly with respect to the torsion axis (T) .

## Revendications

1. Direction assistée électromécanique (100) pour un véhicule automobile, comprenant une vis sans fin d'entraînement (22) entraînée par un moteur électrique (24), qui coopère avec une roue à denture hélicoïdale (20) accouplée à un arbre de direction (1), la vis sans fin d'entraînement (22) étant supportée de manière à pouvoir tourner autour de son axe de vis sans fin (220) dans un palier (40) fixé dans une fixation (42) et la fixation (42) assurant la précontrainte de la vis sans fin d'entraînement (22) dans la direction de la roue à denture hélicoïdale (20), la fixation (42) étant disposée de manière à pouvoir pivoter autour d'un axe de pivotement (S) qui est réalisé essentiellement parallèlement à l'axe de vis sans fin (220),
**caractérisée en ce que**
la fixation (42) est souple en torsion autour d'un axe de torsion (T) disposé perpendiculairement à l'axe de vis sans fin (220).

2. Direction assistée électromécanique (100) selon la revendication 1, **caractérisée en ce que** la fixation (42) présente au moins une région présentant un évidement de matière (424) pour fournir la rigidité en torsion réduite.

3. Direction assistée électromécanique (100) selon la revendication 2, **caractérisée en ce que** l'au moins un évidement de matière (424) est réalisé sous la forme d'une réduction de matière périphérique (420) .

4. Direction assistée électromécanique (100) selon la revendication 2 ou 3, **caractérisée en ce que** l'au moins un évidement de matière (424) est réalisé sous la forme d'au moins un alésage (425) et/ou sous la forme d'au moins une rainure (426).

5. Direction assistée électromécanique (100) selon l'une quelconque des revendications 1 à 4, **caractérisée en ce que** la fixation (42) est précontrainte au moyen d'un ressort contre la roue à denture hélicoïdale (20).

6. Direction assistée électromécanique (100) selon l'une quelconque des revendications précédentes, **caractérisée en ce que** la fixation (42) est réalisée de manière plus souple en torsion autour de l'axe de torsion (T) qu'autour de chaque axe disposé perpendiculairement à l'axe de torsion (T) .
